Europäisches Patentamt

European Patent Office

Office européen des brevets

(19)

(11) Numéro de publication: **0 066 828**
**B1**

(12) **FASCICULE DE BREVET EUROPEEN**

(45) Date de publication du fascicule du brevet: **18.12.85**

(51) Int. Cl.⁴: **G 01 N 21/07**

(21) Numéro de dépôt: **82104769.3**

(22) Date de dépôt: **01.06.82**

(54) **Dispositif et procédé pour la mise en contact successive d'un échantillon liquide avec plusieurs réactifs.**

(30) Priorité: **05.06.81 FR 8111158**

(43) Date de publication de la demande:
**15.12.82 Bulletin 82/50**

(45) Mention de la délivrance du brevet:
**18.12.85 Bulletin 85/51**

(84) Etats contractants désignés:
**AT BE CH DE FR GB IT LI LU NL SE**

(56) Documents cités:
**DE-A-2 529 245**
**FR-A-2 164 306**
**FR-A-2 411 401**
**US-A-4 226 531**

(73) Titulaire: **Guigan, Jean**
**9, rue Jean Mermoz**
**F-75008 Paris (FR)**

(72) Inventeur: **Guigan, Jean**
**9, rue Jean Mermoz**
**F-75008 Paris (FR)**

(74) Mandataire: **Weinmiller, Jürgen et al**
**Zeppelinstrasse 63**
**D-8000 München 80 (DE)**

Courier Press, Leamington Spa, England.

## Description

La présente invention concerne un dispositif pour la mise en contact successive d'un échantillon liquide avec plusieurs réactifs, en vue de son analyse, ainsi qu'un procédé utilisant ce dispositif.

Actuellement pour procéder à une telle analyse, on peut soit transvaser de récipients en récipients l'échantillon, chacun des récipients contenant le réactif approprié, soit introduire dans un même récipient successivement les différents réactifs.

Quel que soit le procédé utilisé, l'accomplissement des opérations d'analyse exige un appareillage plus ou moins complexe, se trouvant à poste fixe et interdisant donc la possibilité de réaliser des analyses au lieu où l'on recueille l'échantillon liquide.

Il est également connu, par exemple par le document FR—A—2 411 401, de transférer grâce à la force centrifuge un échantillon à analyser et un réactif vers un compartiment où ils se mélangent puis vers une cuve d'analyse; toutefois ce procédé n'est pas adapté au cas de plusieurs réactifs, notamment lorsqu'un temps de réaction doit être observé entre l'adjonction des réactifs.

Le dispositif tel que caractérisé dans la revendication 1 permet de remédier aux inconvénients précités. Un procédé d'utilisation d'un tel dispositif est défini dans la revendication 4.

Lorsque le rotor tourne dans un sens, l'échantillon ne peut passer que d'une première cellule à une deuxième cellule, le transfert de la deuxième cellule à une troisième étant interdit. Ce transfert ne peut intervenir que lorsque le sens de rotation du rotor est inversé.

Selon un mode de réalisation préféré de l'invention, on introduit dans la première cellule de la série, une quantité dosée de l'échantillon liquide, la dernière cellule de la série pouvant constituer une cellule de lecture en vue de l'analyse de l'échantillon.

On peut ainsi, d'une manière très simple et dans un dispositif unique, espacer du temps que l'on désire la mise en contact de l'échantillon liquide avec deux réactifs successifs.

Selon un mode de réalisation préféré de l'invention, les cellules d'une même série sont disposées selon deux rangées adjacentes sensiblement radiales, les moyens de communication entre les cellules étant portés par la paroi délimitant les deux rangées.

Avantageusement, les moyens de communication sont formés par des orifices portés par ladite paroi et situés au voisinage de la partie supérieure de celle-ci, les cellules présentant un profil incurvé menant du fond de la cellule vers l'orifice utilisé pour le transfert de l'échantillon liquide d'une cellule vers la suivante.

L'invention sera décrite ci-après plus en détail à l'aide d'un exemple de réalisation et du dessin annexé dans lequel:

— la figure 1 est une vue schématique en perspective d'un dispositif d'analyse conforme à l'invention,

— la figure 2 est une vue agrandie d'une partie du dispositif de la figure 1, avec arrachement partiel.

Sur ces figures, la référence 1 désigne un dispositif d'analyse conforme à l'invention. Il comprend un rotor, comportant un boîtier 2 à axe vertical présentant plusieurs séries de cellules réceptrices. Le rotor est susceptible de tourner dans un premier sens (A) et dans le sens contraire (B). Chaque série comporte une pluralité de cellules disposées sensiblement selon un rayon du rotor.

Une série comprend deux rangées adjacentes de cellules, sensiblement radiales.

La première rangée comporte les cellules 3, 5 et 7, la seconde les cellules 4 et 6.

La paroi commune délimitant les deux rangées est désignée par la référence 8. Les moyens de communication d'une cellule à la suivante dans une même série sont formés par des orifice 9, 10, 11 et 12 portés par ladite paroi 8 et situés au voisinage de la partie supérieure de celle-ci.

Avantageusement les cellules présentent un profil incurvé, désigné par la référence 13, menant du fond de la cellule vers l'orifice utilisé pour le passage de l'échantillon liquide vers la suivante.

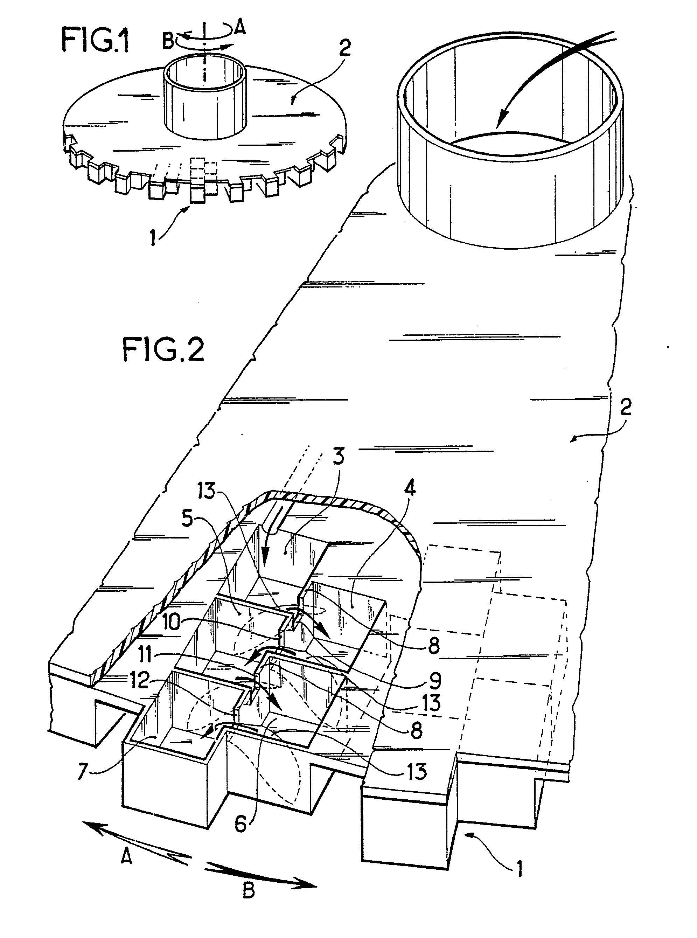

Ainsi que cela apparaît clairement sur la figure 2, il n'est pas nécessaire de prévoir un tel profil incurvé pour l'admission de l'échantillon dans la cellule.

Le fonctionnement du dispositif est le suivant:

Dans la cellule de la série située la plus au centre du rotor, à savoir la cellule 3, on introduit une quantité dosée de l'échantillon liquide.

Par ailleurs, on dispose préalablement dans les cellules 3 à 7 des réactifs, par exemple sous forme lyophilisée, étant entendu par ailleurs que si l'analyse doit comprendre la mise en contact de l'échantillon liquide avec un nombre de réactifs inférieur au nombre des cellules présentées dans la série, certaines desdites cellules ne comporteront alors pas de réactif.

L'échantillon liquide à analyser étant dans la cellule 3, après un temps déterminé correspondant au temps nécessaire pour que la réaction avec le réactif présent dans cette cellule soit terminée, on met en rotation le rotor dans le sens défini par la flèche A. En raison de la force centrifuge, le liquide est déplacé vers le coin de la cellule comportant le profil incurvé et, par l'orifice 9, pénètre dans la cellule 4 où il vient en contact d'un second réactif.

Du fait de la force centrifuge, il est bien évident que lorsque le rotor tourne dans le sens A le liquide, qui pénètre dans la cellule 4 par l'orifice 9, ne peut s'en échapper, ni par l'orifice 9, ni par l'orifice 10 menant à la cellule 5.

On peut stopper le rotor ou maintenir la rotation dans le sens A pendant le temps nécessaire pour que la réaction s'effectue dans la cellule 4, puis le rotor est mis en marche dans le sens B. L'échantillon liquide est alors transféré dans la cellule 5 par l'orifice 10 où il est mis en contact avec un autre réactif.

L'orifice de sortie 10 de la cellule 4 étant situé radialement plus vers l'extérieur que l'orifice d'entrée 9, et en raison du profil incurvé 13, l'échantillon liquide lors de la rotation dans le sens B ne peut s'échapper de la cellule 4 que par ledit orifice 10.

Après réaction dans la cellule 5, le rotor est mis en marche dans le sens A et l'échantillon liquide est alors transféré vers la cellule 6 par l'orifice 11, où il est mis en contact avec un autre réactif, sans qu'il lui soit possible de revenir vers la cellule 4 par l'orifice 10 pour les raisons explicitées ci-dessus.

Après réaction dans la cellule 6, le rotor est mis en marche dans le sens B et l'échantillon liquide est alors transféré vers la cellule 7, par l'orifice 12, où il peut être mis en contact avec un autre réactif si nécessaire.

La cellule 7, dernière cellule de la série, peut constituer une cellule de mesure pour une mesure photométrique ou colorimétrique par exemple, à l'aide d'un appareil approprié non représenté. Cette lecture peut être réalisée sensiblement perpendiculairement au rayon du rotor, ou bien perpendiculairement au plan moyen du boîtier.

Le rotor peut être en résine synthétique et réalisé par moulage.

La quantité dosée d'échantillon liquide introduite dans la cellule 3 peut l'être par tout moyen approprié.

Toutefois on utilisera avantageusement le dispositif et le procédé décrits dans le document EP—A—0 062 907 (état de la technique selon l'art. 54 (3) de la CBE).

Dans cette demande, il a été décrit un dispositif pour délivrer une dose déterminée d'un échantillon de liquide dans une cellule réceptrice portée par un rotor, en vue de son analyse, ledit rotor comprenant un boîtier à axe vertical dans lequel sont ménagées une cuvette annulaire munie de cloisons radiales délimitant des compartiments servant de réceptacle pour ledit échantillon de liquide et plusieurs cellules réceptrices réparties régulièrement autour de la cuvette annulaire, des moyens d'acheminement du liquide étant prévus entre chaque compartiment de la cuvette et chaque cellule réceptrice.

Ce dispositif est caractérisé par le fait que ces moyens d'acheminement comprennent une chambre de mesure, communiquant avec le compartiment réceptacle par un orifice, dit orifice d'entrée, ladite chambre de mesure présentant un second orifice, de préférence capillaire, dit orifice de sortie, les deux dits orifices délimitant pour la chambre de mesure un volume déterminé, des moyens étant prévus à la sortie de ladite chambre de mesure pour diriger le liquide issu de celle-ci soit vers une chambre de trop plein lorsque le rotor tourne dans un premier sens, soit vers la cellule réceptrice lorsque le rotor tourne en sens inverse.

Les moyens prévus à la sortie de la chambre de mesure comportent un canal d'écoulement allant de la chambre de mesure à la cellule réceptrice, et sensiblement radial, ledit canal présentant immédiatement après l'orifice de sortie une dérivation menant à la chambre de trop plein, la dérivation étant située par rapport audit canal du même côté que la chambre de mesure.

Ce dispositif fonctionne comme suit:

Dans un premier temps, on introduit l'échantillon liquide en léger excès par rapport à la contenance de la chambre de mesure dans un compartiment de la cuvette annulaire, puis dans un deuxième temps, on met le rotor en rotation dans ledit premier sens ce qui entraîne le déplacement de tout le liquide contenu dans ledit compartiment vers la chambre de mesure au travers de l'orifice d'entrée, le remplissage de la chambre de mesure, l'excédent de liquide étant chassé de ladite chambre de mesure par l'orifice de sortie vers la chambre de trop plein, enfin, dans un troisième temps, on met le rotor en rotation dans ledit sens inverse ce qui entraîne le déplacement de tout le liquide contenu dans la chambre de mesure vers la cellule réceptrice. ·

Ce dispositif pour délivrer une dose déterminée de l'échantillon liquide peut être situé sur le rotor représenté sur le dessin en amont de la première cellule 3 de la série de cellules ou une mise en contact est réalisée avec les réactifs, la cellule 3 constituant alors la cellule réceptrice dudit dispositif, le processus pour délivrer une dose déterminée d'un échantillon liquide dans cette cellule 3 précédant la mise en contact successive de l'échantillon avec les réactifs dans les cellules 3 à 7.

Des moyens, non représentés, sont prévus pour évacuer l'air lors des opérations de centrifugation.

Le dispositif selon l'invention permet une analyse simultanée de plusieurs échantillons de liquide qui sont distribués dans différentes séries de cellules telles que 3 à 7 qui sont réparties angulairement autour de la périphérie du dispositif.

## Revendications

1. Dispositif pour la mise en contact successive d'un échantillon liquide avec plusieurs réactifs, comprenant un rotor comportant un boîtier (2) à axe de rotation vertical présentant plusieurs séries de cellules, les cellules (3 à 7) d'une même série communiquant entre elles, caractérisé par le fait que chaque série de cellules étant constituée par deux rangées formées l'une de cellules première, troisième, etc. dites cellules impaires, l'autre de cellules deuxième, quatrième, etc. dites cellules paires les moyens de communication entre les cellules d'une série sont disposés de manière que lors de la rotation du rotor dans un premier sens le transfert de l'échantillon puisse s'effectuer d'une cellule impaire (3, 5, 7) vers la cellule paire suivante (4, 6) et qu'un transfert de l'échantillon d'une cellule paire vers une cellule impaire précédente soit impossible, et que lors de la rotation du rotor dans l'autre sens le transfert de l'échantillon puisse s'effectuer d'une cellule paire (4, 6) vers la cellule impaire suivante (5, 7), des moyens étant prévus pour inverser le sens de rotation du rotor après chaque opération de transfert de l'échantillon d'une cellule vers l'autre.

2. Dispositif selon la revendication 1, caractérisé par le fait que les deux rangées selon lesquelles sont disposées lesdites cellules (3 à 7) d'une même série sont adjacentes et sensiblement radiales, les moyens de communication (9 à 12) entre les cellules étant portés par une paroi (8) délimitant les deux rangées.

3. Dispositif selon la revendication 2, caractérisé par le fait que les moyens de communications sont formés par des orifices (9 à 12) portés par ladite paroi et situés au voisinage de la partie supérieure de celle-ci, les cellules (3 à 6) présentant un profil incurvé (13) menant du fond de la cellule vers l'orifice utilisé pour le transfert de l'échantillon liquide d'une cellule vers la suivante.

4. Procédé pour la mise en contact successive d'un échantillon liquide avec plusieurs réactifs utilisant le dispositif selon l'une des revendications 1 à 3 et comportant les étapes suivantes:
— on dispose les réactifs dans les cellules d'une série, le nombre de cellules constituant la série étant au moins égal au nombre des réactifs;
— on introduit l'échantillon dans la première cellule de ladite série;
— on obtient le transfert de l'échantillon d'une cellule à la suivante par rotation du rotor;
le procédé étant caractérisé en ce qu'on inverse le sens de rotation du rotor après chaque transfert de l'échantillon.

5. Procédé selon la revendication 4, caractérisé par le fait qu'on introduit dans la première cellule (3) de la série, une quantité dosée de l'échantillon liquide, la dernière cellule (7) de la série constituant une cellule de lecture en vue de l'analyse de l'échantillon.

6. Procédé selon l'une des revendications 4 à 5, caractérisé par le fait qu'à l'intérieur des cellules on dispose des réactifs à l'état lyophilisé.

## Patentansprüche

1. Vorrichtung für das aufeinanderfolgende Inkontaktbringen einer flüssigen Probe mit mehreren Reagenzien, mit einem Rotor, der ein Gehäuse (2) mit vertikaler Rotationsachse aufweist, das mehrere Folgen von Zellen enthält, wobei die Zellen (3 bis 7) einer Folge untereinander in Verbindung stehen, dadurch gekennzeichnet, daß jede Folge von Zellen aus zwei Reihen besteht, von denen die eine aus der ersten, dritten usw. Zelle, ungerade Zellen genannt, besteht, und die andere aus der zweiten, vierten usw. Zelle, gerade Zellen genannt, besteht, daß die Verbindungsmittel zwischen den Zellen einer Folge so angeordnet sind, daß bei Drehung des Rotors in einer ersten Richtung der Transfer der Probe von einer ungeraden Zelle (3, 5, 7) zur folgenden geraden Zelle (4, 6) durchgeführt werden kann, wobei ein Transfer der Probe von einer geraden Zelle zur vorhergehenden ungeraden Zelle unmöglich ist, und daß bei Drehung des Rotors in der anderen Richtung der Transfer der Probe von einer geraden Zelle (4, 6) zur folgenden ungeraden Zelle (5, 7) erfolgen kann, wobei Mittel vorgesehen sind, um die Drehrichtung des Rotors nach jedem Transfervorgang der Probe von einer Zelle zur anderen umzukehren.

2. Vorrichtung nach Anspruch 1, dadurch gekennzeichnet, daß die beiden Reihen, gemäß denen die Zellen (3 bis 7) einer Folge angeordnet sind, benachbart und im wesentlichen radial sind, wobei die Verbindungsmittel (9 bis 12) zwischen den Zellen von einer Wand (8) getragen werden, die die beiden Reihen begrenzt.

3. Vorrichtung nach Anspruch 2, dadurch gekennzeichnet, daß die Verbindungsmittel von Öffnungen (9 bis 12) gebildet werden, die von der Wand getragen werden und in der Nähe des oberen Teils dieser Wand angeordnet sind, wobei die Zellen (3 bis 6) ein gekrümmtes Profil (13) aufweisen, das vom Boden der Zelle zu der Öffnung führt, die dem Transfer der flüssigen Probe von einer Zelle zur nächsten dient.

4. Verfahren für das aufeinanderfolgende Inkontaktbringen einer flüssigen Probe mit mehreren Reagenzien, das die Vorrichtung gemäß einem der Ansprüche 1 bis 3 verwendet und die folgenden Schritte aufweist:
— man bringt die Reagenzien in die Zellen einer Folge, wobei die Anzahl der Zellen, die die Folge bilden, mindestens gleich der Anzahl der Reagenzien ist,
— man führt die Probe in die erste Zelle dieser Folge ein,
— man erhält den Transfer der Probe von einer Zelle zur nächsten durch Drehung des Rotors,
wobei das Verfahren dadurch gekennzeichnet ist, daß man die Drehrichtung des Rotors nach jedem Transfer der Probe umkehrt.

5. Verfahren nach Anspruch 4, dadurch gekennzeichnet, daß man in die erste Zelle (3) der Folge eine dosierte Menge der flüssigen Probe einführt, während die letzte Zelle (7) der Folge eine Lesezelle zur Analyse der Probe bildet.

6. Verfahren nach einem der Ansprüche 4 bis 5, dadurch gekennzeichnet, daß man Reagenzien im lyophilisierten Zustand im Inneren der Zellen anordnet.

## Claims

1. A device for bringing a liquid sample successively into contact with several reagents, comprising a rotor containing a housing (2) having a vertical rotation axis and presenting several series of cells, the cells (3 to 7) of one series intercommunicating one with the other, characterized in that each series of cells being constituted by two rows formed one by the first, third etc, cell, called odd cells, the other by the second, fourth etc. cell, called even cells, the communication means between the cells of a series are disposed in such a way that during the rotation of the rotor in a first direction, the transfer of the sample can be carried out from an odd cell (3, 5, 7) towards the following even cell (4, 6), whereby a transfer

7 · 0 066 828 8

of the sample from an even cell towards a preceding odd cell is impossible, and that during the rotation of the rotor in the other direction, the transfer of the sample can be carried out from an even cell (4, 6) towards the following odd cell (5, 7), means being provided for reversing the rotation direction of the rotor after each transfer operation of the sample from one cell to the other.

2. A device according to claim 1, characterized in that the two rows according to which the cells (3 to 7) of the same series are arranged, are adjacent and essentially radial, the communication means (9 to 12) between the cells being carried by a wall (8) delimiting the two rows.

3. A device according to claim 2, characterized in that the communication means are constituted by openings (9 to 12) carried by said wall and situated in the neighbourhood of the upper part of the latter, the cells (3 to 6) presenting a curved profile (13) leading from the bottom of the cell to the opening used for the transfer of the liquid sample from one cell to the next one.

4. A process for bringing a liquid sample successively into contact with several reagents using the device according to one of claims 1 to 3 and comprising the following steps:
— the reagents are disposed in the cells of a series, the number of cells constituting the series being at least equal to the number of reagents,
— the sample is introduced into the first cell of said series,
— the transfer of the sample from one cell to the next one is obtained by rotation of the rotor, the process being characterized in that the rotation direction of the rotor is reversed after each transfer of the sample.

5. A process according to claim 4, characterized in that a dosed quantity of the liquid sample is introduced into the first cell (3) of the series, the last cell (7) of the series constituting a reading cell for the analysis of the sample.

6. A process according to one of claims 4 to 5, characterized in that reagents in a freeze-dried form are disposed within the cells.

**FIG.1**

**FIG.2**